# EUROPEAN PATENT SPECIFICATION

(11) **EP 3 633 286 B1**
(45) Date of publication and mention of the grant of the patent: **30.08.2023**
(21) Application number: 19201188.0
(22) Date of filing: 02.10.2019
(51) Int. Cl.: F24H 1/16, F24H 1/43, F28D 7/02, F28F 9/00, F28F 9/02, F24H 9/02, F24H 9/14

(54) **IMPROVED HEAT EXCHANGER FOR GAS BOILERS**
VERBESSERTER WÄRMETAUSCHER FÜR GASBOILER
ÉCHANGEUR DE CHALEUR AMÉLIORÉ POUR CHAUDIÈRES À GAZ

(30) Priority: 05.10.2018 IT 201800009186
(43) Date of publication of application: 08.04.2020
(73) Proprietor: Valmex S.p.A., 61030 Lucrezia di Cartoceto (PU) (IT)
(72) Inventor: CAPODAGLI, Severino, 61032 Fano (PU) (IT)
(74) Representative: Provvisionato, Paolo

(56) References cited:
- EP-A1- 2 995 880
- EP-A1- 3 354 999
- EP-A2- 1 039 246
- KR-B1- 101 532 023

## Description

### Field of the invention

The present invention relates to a heat exchanger for gas boilers. The invention has been developed with particular reference to a heat exchanger of the type with helical tube. The invention relates, particularly but not exclusively, the casing of such a heat exchanger.

### Technological background

Gas boilers for heating are known in which the water to be heated flows through a tube wound in a helix or a spiral. A gas burner produces hot flue gases which pass, one or more times, through the turns of the helical tube so as to transfer the heat to the water that flows through the tube. After releasing their heat to the water, including the latent heat of condensation, the fumes are discharged to the outside of the exchanger and the gas boiler.

The casing that contains the helical tube is an important component of the heat exchanger. It actually should withstand the high temperatures of the combustion smokes with which it comes into contact. The various parts which form the casing are subject to very different temperatures, and therefore particular care should be put into the construction of the casing taking into account the temperature gradients which can provoke high stresses during the use of the heat exchanger. The material of the casing should therefore be selected with attention to its resistance, duration, workability and low cost. In fact the casing should be as inexpensive as possible to keep low the cost of the heat exchanger. The working processes to be performed on the casing in its production should be limited to the minimum indispensable, in order to reduce as well to a minimum the costs. The casing should be easy to mount, even by unskilled personnel and should be readily adaptable to heat exchangers with helical tubes of different extension, according to the size of the heat exchanger.

The present applicant has developed a particular casing for helical heat exchangers which is described in Italian utility model No. 202015000021221, corresponding to CN 205825435 U. The casing of this known heat exchanger has been designed in such a way as to not use tie rods to clamp the base and the lid that are arranged at the two ends of the cylindrical shell which surrounds the helical tube. From the plastic base of the casing some columns extend on which the lid is directly engaged. The cylindrical shell is enclosed between the base and the lid. This known casing does not make use of any gaskets. On each seal a sealant of the silicone type is used, which is able to withstand the high temperatures of the fumes which it comes in contact with. The sealant is placed in the contact zones between the cylindrical shell and, respectively, the base and the lid with the exclusion of a zone formed by a depression on the cylindrical shell for discharging the condensation. The seal in this discharge zone, as well as in the areas of the end openings of the helical tube is ensured by particularly shaped inserts.

The use of a silicon sealant for providing the sealing of the casing is a solution which is not suitable for every purpose. In certain circumstances it is preferable that the seals between the cylindrical shell and the base and the lid, respectively, are made by gaskets. However, the structure of the casing known from the Italian utility model mentioned above does not lends itself to use with annular sealing gaskets at the edges of the cylindrical shell. In fact, the use of annular seals at the top of the cylindrical shell does not guarantee a sufficient sealing, whereas the use of an annular gasket interposed between the inner wall of the shell and the base is not possible because it would not be possible to provide an adequate seat for the gasket because of undercuts which would make it extremely difficult and expensive, if not impossible, to realize suitable moulds.

On the other hand, the known solutions of casings with sealing gaskets are not suitable for automated assembly and in any case are complex and expensive.

The documents EP 2 995 880 A1, KR 101 532 023, EP 1 039 246 A2 disclose all a heat exchanger of the type with a helical tube housed in a casing, wherein the casing comprises a cylindrical shell at the ends of which a base and a cover are respectively mounted.

### Summary of the invention

It is an object of the present invention to provide a heat exchanger with helical tube which solves the problems of the prior art, and in particular allows the use of sealing gaskets between the cylindrical shell and, respectively, the base and the lid of its casing, making it easy to automate the assembly. Another object of the present invention is to provide such a heat exchanger with helical tube enclosed in a casing which is simple and economical to manufacture and assemble. Another object of the present invention is to provide such a heat exchanger with a helical tube which is reliable with time. Another object is to provide a casing for heat exchanger with helical tube which is modular so that it takes only minor changes to be adapted to heat exchangers of different sizes.

In order to achieve all or some of the objects indicated above, the invention relates to a heat exchanger with a casing having the characteristics indicated in the appended claims, which form an integral part of the present description.

According to a particular aspect, it is described a heat exchanger with helical tube. The helical tube is housed in a casing. The casing can comprise a cylindrical shell, also said cylindrical sleeve. At one end of the cylindrical shell a base can be mounted. At the other end of the cylindrical shell a lid can be mounted. The lid may have a central hole. The base and the lid can be fixed to each other with the interposition of connection members. The connection members can be coupled to the base and/or to the lid. In a particular embodiment, the connection members can be mounted by fitting and/or snap connection onto the base. This avoids the use of connecting elements such as screws, bolts, rivets or the like, without however having to make the connection members in one integral piece with the base, as in the prior art. This makes it possible to quickly assemble, also in an automated way, the connecting members to the base, with a consequent saving in terms of time and cost.

By fitting it is herein meant an interlocking coupling with interference fit between two elements, such that it is impossible or very difficult to detach the two elements once they have been fitted. By snap connection it is meant a connection between two elements which occurs due to the elastic return of a previously deformed member which carries a tooth or other stop element which engages a corresponding seat. Both the interlocking coupling and the snap connection are irreversible without a manual operation from the outside. The arrangement of these couplings for the connection elements between the base and the lid of the heat exchanger allows to adapt the casing to heat exchangers of various heights of the helical tube, achieved simply by arranging connecting members of different length, which can be coupled to a same base and fixed to a same cover. It is also easier to manage the components by an automated system for assembling the heat exchanger. The components of the casing, including the base, may be conveniently stored because they are substantially flat. Last but not least, a casing made in this way allows to mould a base with an annular seat for housing an annular gasket for the seal between the base and the cylindrical shell. Thanks to this, is also described an annular gasket which can be interposed in the radial direction between the cylindrical shell and the base. In greater detail, the base can comprise an annular edge with an outer wall on which an annular groove can be formed to house the annular gasket. The seat of the annular gasket is therefore made in such a way as to shield the gasket itself as much as possible from the condensation which forms in the heat exchanger and that could provoke a more rapid deterioration of the gasket.

According to another particular aspect, in order to facilitate the discharge of condensation from the exchanger, the outlet for the condensation can be directly made on the cylindrical shell, so as to ensure a correct discharge of the condensation without the risk that it stagnates and reduces the reliability of the heat exchanger over time. Preferably the base comprises a projection close to a last turn of the helical tube, which is shaped so as to collect the condensation, in particular the condensation coming from the aperture for the discharge of the fumes. The projection makes it possible to collect the condensation and to direct it toward the condensation outlet by making it pass above or below the last turn of the helical tube. This evacuation system prevents the stagnation of condensation also in those cases when the condensation re-enters the heat exchanger from the aperture for the discharge of the fumes.

According to a different aspect, the connection members can comprise positioning elements that determine the relative positioning on the base, in its configuration which is intended for connection with the lid. The positioning members can cooperate with guide members provided on the base.

According to a further aspect, the connection members can comprise abutment elements. The abutment elements can cooperate with abutment members. The abutment members can be provided on the base. The abutment members can oppose the pull exerted in the connection between the base and the lid.

According to a particular aspect, the connection members can each comprise one or more appendages. The appendages may cooperate with an abutment member. The abutment member may be provided on the base. The appendages can act at the same time as positioning elements, to determine the relative positioning of the connection members with respect to the base, and as abutment elements, in order to counteract the pull exerted in the connection between the base and the lid.

According to a different aspect, the connection members can comprise stop elements. The stop elements can hold the connecting members on the base in the configuration or in the position predisposed for connecting the connection members to the cover. According to a particular aspect, the stop elements can comprise at least a tooth. The tooth can snap-engage in a seat. The seat can be arranged on the base.

According to a different aspect, the connection members can comprise an elastic element in order to compensate for the clearance and tolerances between the cover and the helical tube. In a particular embodiment, the resilient element is a cup spring. In another variant, the connection members could be totally or partially elastic.

According to a different aspect, the base and the cover can each comprise an opening for a respective access of the helical tube. The opening in the base and/or the opening in the cover can be made to measure with respect to the respective access. At least one turn of the end of the helical tube can have a pitch greater than the pitch between the other turns to allow insertion of the access in the respective opening in the base and/or in the cover without interfering with the cylindrical shell. In this way it is not necessary to provide plastic inserts in the area of the accesses of the tube wound in a helix, thereby increasing the reliability of the seals, in particular the fume seal.

By providing connection elements, possibly elastic or provided with elastic members, which are separated from the base, it is possible to compensate for the tolerances of the height of the tube wound in a helix, so as to ensure that the clamping of the cover is sufficient to bring it in a thermal contact with the helical tube. This aspect is particularly important when the cover is made of metal, for example aluminium, since the contact between the cover and the turns of the helical tube helps to reduce the temperature of the cover. A greater uniformity of the gaps between each coil of the spiral tube can also be obtained, so as to have a more regular and uniform fume passage between the turns, and therefore a more balanced heat exchange between the fumes and the water flowing along the helical tube.

### Brief description of the drawings

Further characteristics and advantages of the present invention will better emerge from the detailed description that follows of a preferred embodiment, given with reference to the appended drawings which are given by way of non limiting example, in which:
- Figure 1 is a perspective view of a heat exchanger with a casing embodying aspects of the present invention;
- Figure 2 is a perspective view of the heat exchanger in the direction of arrow II of Figure 1;
- Figure 3 is an exploded view of the heat exchanger of figures 1 and 2;
- Figure 4 is a section according to line IV-IV of Figure 1 of a particular on an enlarged scale, in which it is shown the snap connection of the columns to the base in a coupled configuration;
- Figure 5 is a sectional view similar to that of Figure 4 and in which it is shown a configuration of the columns detached from the base;
- Figure 6 is a perspective view in the direction of the arrow VI in Figure 5 of the particular of the seat made on the base to house the columns;
- Figure 7 is a sectional view according to the line VII-VII of Figure 4;
- Figure 8 is a perspective view of a section taken on a diametric plane of the heat exchanger of Figure 1 placed in its operative position, in which it is shown a first solution for discharging the condensation;
- Figure 9 is a partial perspective view of a particular of the base of the exchanger of Figure 8;
- Figure 10 is a partial perspective view of a section of heat exchanger similar to Figure 8 which shows a second solution for discharging the condensation; and
- Figure 11 is a partial perspective view of a particular of the base of the exchanger of Figure 10.

### Detailed Description

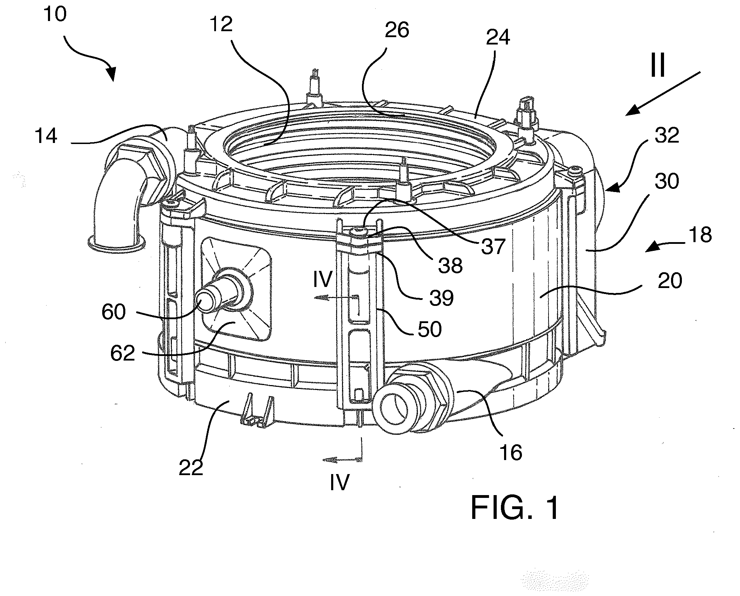

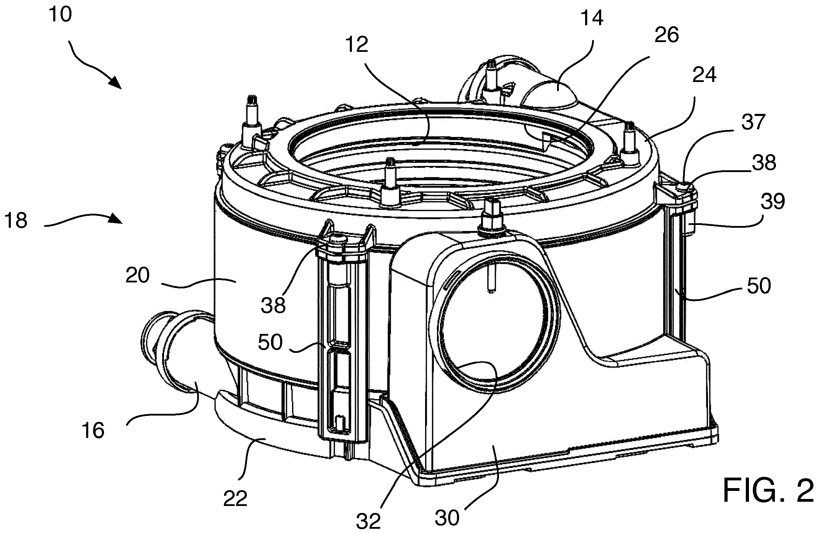

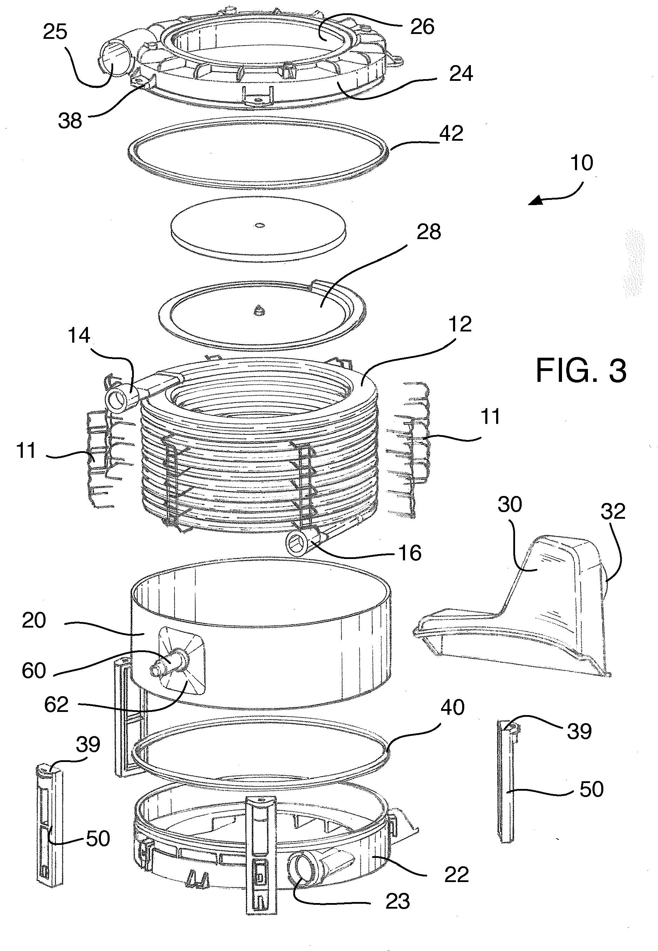

With reference now to Figures 1 to 3, reference number 10 indicates a heat exchanger for gas boilers of generally known type, with a tube 12 wound in a helix. The heat exchanger can naturally be also made with two helical tubes, one inside the other to heat two different circuits, for example the domestic heating and the domestic water. Also the number of turns of the helix and the section of the tube can be different from what is shown by way of mere example in the figures. In figures 1 to 3 the heat exchanger 10 is shown in horizontal for clarity of illustration, but in use it is arranged rotated by 90°, with the axis of the turns of the helical tube 12 arranged in a horizontal position and the two accesses 14, 16 of the tube 12 facing downwards. The minimum distance between the turns of the tube 12 is maintained by comb-like spacers 11 (see Fig. 3).

The helical tube 12 of the heat exchanger 10 is enclosed in a casing 18. The casing 18 comprises a cylindrical shell 20. The cylindrical shell 20 wraps to the outside the helical tube 12. Preferably the cylindrical shell 20 is of metal, for example stainless steel. The cylindrical shell 20 is enclosed between a base 22 and a cover 24. On the base 22 there is an opening 23 for the passage of the access 16 of the helical tube 12. On the cover 24 there is a similar aperture 25 for the passage of the access 14 of the helical tube 12. The base 22 is preferably made of a plastic material and the cover 24 is preferably made of aluminium, and they are made for example by moulding. The cover 24 has a large central circular opening 26, substantially corresponding to the inside diameter of the turns of the helical tube 12. In use, the gas burner of the boiler is facing the circular opening 26 in such a way as to direct the combustion gases inside the helix of helical tube 12. At about halfway of the helix of helical tube 12 there is a circular diaphragm 28 (see Figure 3). The base 22 communicates with a chamber 30 for collecting and discharging of the fumes, which leave the casing 18 through a discharge opening 32. The cover 24 has appendages 38, preferably but not limitatively in the number of four, extending radially. In the appendages 38 are formed holes in which are inserted screws 37 which are clamped on nuts 39 housed at the ends of columns 50 attached to the base 22, as will be better described in the following. Preferably, Belleville washers with a certain elasticity are interposed between the columns 50 and the appendages 38 of the cover 24 to recover the plays and tolerances of the turns of the helical tube 12.

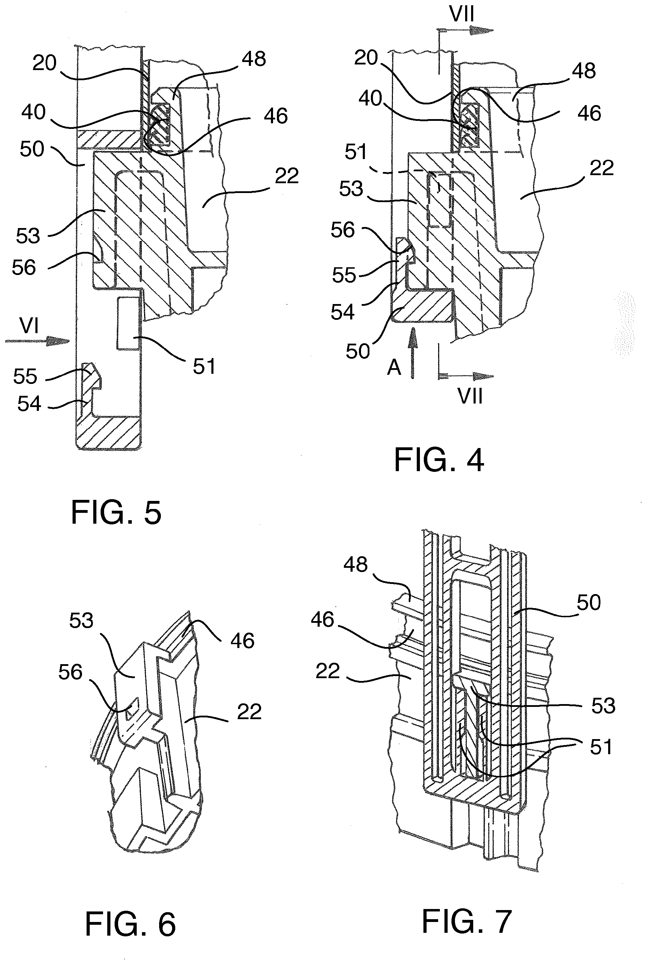

The circular end edges of the cylindrical shell 20 are sealed on the base 22 on one side and on the cover 24 on the other side, by means of two respective annular gaskets 40, 42. In particular, as can be seen in figures 4 and 5, the annular gasket 40 between the base 22 and the cylindrical shell 20 is accommodated in a seat or circumferential groove 46. The groove 46 is formed on the outer side of an annular edge 48 of the base 22. In this way the annular gasket 40 is protected as much as possible from the condensation which forms in use inside the heat exchanger 10. The cover 24 has a similar seat for housing the annular gasket 42. In a region of the heat exchanger opposite to the fume outlet 32 there is positioned a condensation discharge 60 formed on the cylindrical shell 20. On the cylindrical shell 20 it is formed a depression 62, preferably by drawing, adapted to convey the condensation toward the discharge 60.

As can be seen in the particulars of Figures 4 to 7, each column 50 comprises two lateral appendages 51. The lateral appendages 51 slidably engage below a projection 53 which protrudes from the base 22 and has a T-shaped transverse cross-section. The lateral appendages 51 have the function of guiding and positioning the columns 50, which, when they are attached to the base 22, are correctly oriented and arranged radially in the predetermined positions for the connection to the cover 24. Moreover, the lateral appendages 51 in the connected configuration of Figure 4 abut against the projection 53 in the direction of the arrow A, thus opposing the pulling action exerted thereon by the connection to the cover 24 by means of screws 37. On the lower portion of the column 50 there is a flexible appendage 54. At the end of flexible appendage 54 an engagement tooth 55 is formed. The engagement tooth 55 is shaped so as to snap engage in a seat 56 formed on the projection 53, visible in Figure 6.

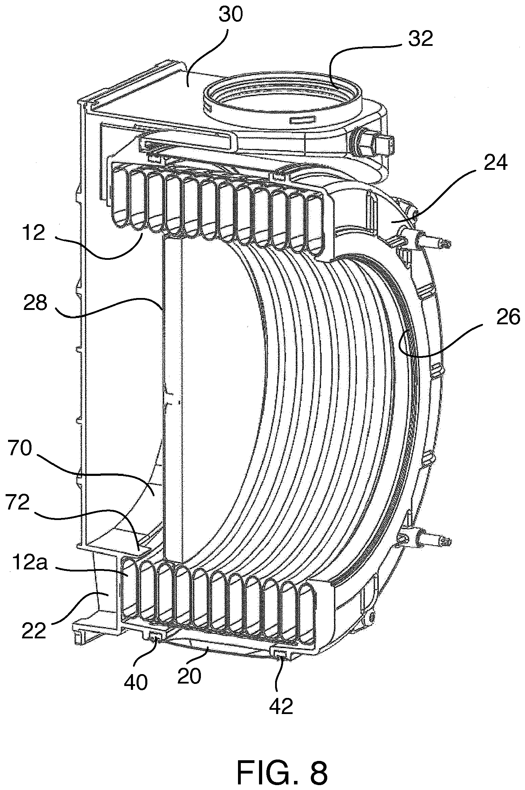

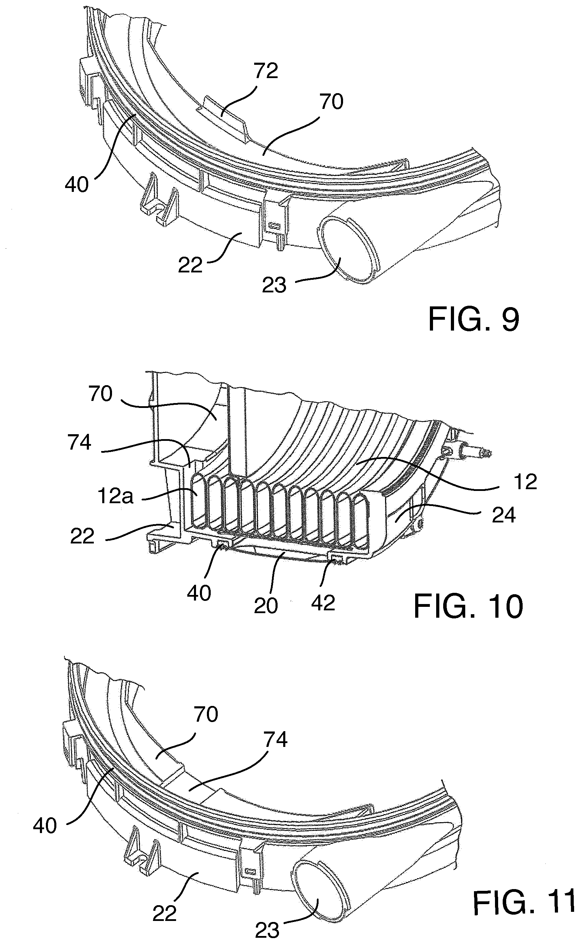

The position of the annular gaskets 40, 42 between the cylindrical shell 20 and respectively the base 22, preferably of plastic material, and the cover 24, preferably of a metal such as aluminum, is such that they are shielded as much as possible with respect to the direct action of the fumes and the condensation inside the heat exchanger. To prevent the stagnation of the condensation, on the cylindrical shell 20 it is formed the condensation discharge opening 60. In use, the condensation can re-enter the heat exchanger also from the exhaust aperture 32 of the fumes. To prevent the condensation stagnation in the lower part of the heat exchanger, special conformations of the base 22 are provided which allow to discharge the condensation toward the condensation discharge opening 60. In a first solution, shown in Figures 8 and 9, the base 22 comprises in its lower portion a projection 70 for collection of the condensate 32 coming from the discharge of the fumes. The projection 70 has a substantially crescent-moon shape. The projection 70 is close to a last coil 12a of the helical tube 12. The condensation is conveyed in a lower zone of the projection 70 from which an appendage 72 protrudes. The appendage 72 extends beyond the last turn 12a of the helical tube 12 in a manner such that the condensation can pass through between one coil and another of the helical tube 12 and is then evacuated through the condensation discharge opening 60. In a different embodiment, shown in figures 10 and 11, in the lower region of the projection 70 a bypass 74 is formed instead of the appendage 72 of the previous embodiment. The bypass 74 allows the condensation to pass under the last turn 12a of the helical tube 12 to be then evacuated through the condensation discharge opening 60.

In order to mount the casing 18 onto the helical tube 12, the annular seals 40, 42 are firstly housed in the respective housing seats formed on the base 22 and the cover 24. The access 16 of the tube wound in a helix can then be inserted in the corresponding aperture 23 formed on the base 22 whose dimension can correspond to that of the access, without it being necessary to provide capping inserts as in the prior art. The insertion of the access 16 in the opening on the base is facilitated by the fact that the columns 50 are not yet fitted to the base 22.

Subsequently it is possible to insert the cylindrical shell 20 on the base 22 in such a way that its edge comes into contact with and compresses the gasket 40, to provide the seal between the cylindrical shell 20 and the base 22. Subsequently, the columns 50 are fitted onto the base, by operating in a sequence starting from the detached configuration shown in Figure 5 and progressively pushing the column in the direction indicated by the arrow A in Figure 4 in such a way that the lateral projections 51 of the column 50 slidingly engage under the two wings of the projection 53. The push in the direction A brings the engagement tooth 55 to snap enter into the seat 56, from which it can no longer disengage, at least without the aid of an external tool. When the columns 50 are all coupled to the base 22, it is possible to mount the cover 24 by first inserting the access 14 in the aperture 25. Since the cylindrical shell 20 could hinder this operation, it can be enivisaged to make the first turn of the helical tube 12 slightly more spaced with respect to the other turns, so that the access 14 can be inserted in the opening 25 without interfering with the cylindrical shell 20. The subsequent clamping of the cover 24 brings back the first turn of the helical tube 12 to the predetermined distance.

The cover 24 is clamped by tightening the screws 37 on the ends 39 of the columns 50. In this condition, the appendages 51 of the columns 50 abut against the projection 53 in the direction of the arrow A of Figure 4, so as to oppose to the pull occurring when the screws 37 are tightened. The possible elasticity of the columns 50 or of their connection, provided for example by springs placed between the columns 50 and the appendages 38 of the cover 24, allows to compensate for the play and tolerances of the helical tube 12. The clamping of the cover 24 brings it into thermal contact with the upper turn of the helical tube 12, so as to facilitate dissipating the heat of the cover 24.

The casing for heat exchanger described above can be easily adapted to helical tubes having various number of turns, to provide heat exchangers of different sizes. For example, in the case of a heat exchanger having a helical tube with a greater number of turns than that shown in the figures, the modification to be made are rather simple. It is in fact needed to provide just a cylindrical shell higher than the cylindrical shell 20 illustrated in the figures, and columns 50 of a corresponding length. It can however be retained the same base 22 and cover 24 of the example illustrated, which are connected in a stable, reliable and safe manner.

Of course, without prejudice to the principle of the invention, the embodiments and particular of construction can widely vary with respect to what has been described and illustrated without thereby departing from the scope of the present invention.

## Claims

1. A heat exchanger of the type with a helical tube (12) housed in a casing, wherein the casing comprises a cylindrical shell (20) at the ends of which a base (22) and a cover (24) are respectively mounted, **characterized in that** the base and the cover are fixed one to the other with the interposition of connection members (50) which are mounted by fitting and/or snap coonection onto the base (22).

2. A heat exchanger according to claim 1, comprising an annular gasket (40) interposed radially between the cylindrical shell (20) and the base (22).

3. A heat exchanger according to claim 2, wherein the base (22) comprises an annular edge on the outer wall of which an annular groove is provided for housing the annular gasket (40) .

4. A heat exchanger according to any one of the preceding claims, in which the connection members (50) comprise positioning elements (51) which cooperate with guide members (53) provided on the base (22) for the predetermined positioning of the connection members (50) with respect to the base (22) in the configuration intended for connection with the cover (24).

5. A heat exchanger according to any one of the previous claims, wherein the connection members (50) comprise abutment elements (51) which cooperate with abutment members (53) provided on the base (22) to counteract the pull exerted in the connection between the base (22) and the cover (24).

6. A heat exchanger according to Claims 4 and 5, in which the connection members (50) each comprise one or more appendages (51) which cooperate with an abutment member (53) on the base (22) to act at the same time as positioning elements and as abutment elements.

7. A heat exchanger according to any one of the preceding claims, in which the connection members (50) comprise stop elements (55) which hold the connection members (50) on the base (22) in the configuration predisposed for connecting the connection members (50) to the cover (24).

8. A heat exchanger according to Claim 7, wherein the stop elements (55) comprise at least one tooth (55) which snap-engages in a seat (56) arranged on the base (22).

9. A heat exchanger according to any one of the preceding claims, in which the connection members (50) comprise an elastic element for recovering the play and tolerances between the cover (24) and the helical tube (12).

10. A heat exchanger according to any one of the previous claims, wherein the base (22) and the cover (24) each comprise an aperture for a respective access (14, 16) of the helical tube (12), the aperture in the base (22) and/or the aperture in the cover (24) being made to measure with respect to the respective access, at least one end turn of the helical tube (12) having a pitch greater than the pitch between the other turns to allow the insertion of the access (14, 16) in the respective aperture in the base (22) and/or in the cover (24) without interfering with the cylindrical shell (20).

11. A heat exchanger according to any one of the preceding claims, wherein an opening (60) for condensation is provided on the cylindrical shell (20).

12. A heat exchanger according to Claim 11, wherein the base (22) comprises a projection (70) close to the end turn (12a) of the helical tube (12), the projection being shaped so as to collect the condensation and direct it towards the opening (60) making it pass above or below the end turn (12a) of the helical tube (12).

## Patentansprüche

1. Wärmetauscher des Typs mit einem wendelförmigen Rohr (12), das in einem Gehäuse untergebracht ist, wobei das Gehäuse einen zylindrischen Gehäusemantel (20) hat, an dessen Enden jeweils eine Basis (22) und eine Abdeckung (24) montiert sind, **dadurch gekennzeichnet, dass** die Basis und die Abdeckung unter Zwischenschaltung von Verbindungselementen (50), die durch Aufstecken und/oder Aufschnappen auf die Basis (22) montiert sind, aneinander befestigt sind.

2. Wärmetauscher nach Anspruch 1, umfassend eine ringförmige Dichtung (40), die radial zwischen dem zylindrischen Gehäusemantel (20) und der Basis (22) angeordnet ist.

3. Wärmetauscher nach Anspruch 2, wobei die Basis (22) eine ringförmige Kante aufweist, an deren Außenwand eine ringförmige Nut zur Aufnahme der ringförmigen Dichtung (40) vorgesehen ist.

4. Wärmetauscher nach einem der vorangehenden Ansprüche, wobei die Verbindungselemente (50) Positionierungselemente (51) umfassen, die mit Führungselementen (53) zusammenwirken, die an der Basis (22) vorgesehen sind für die mit Bezug auf die Basis (22) vorgegebene Positionierung der Verbindungselemente (50) in der für die Verbindung mit der Abdeckung (24) bestimmten Konfiguration.

5. Wärmetauscher nach einem der vorangehenden Ansprüche, wobei die Verbindungselemente (50) Anlageelemente (51) umfassen, die mit an der Basis (22) vorgesehenen Anlagekörpern (53) zusammenwirken, um dem Zug entgegenzuwirken, der in der Verbindung zwischen der Basis (22) und der Abdeckung (24) ausgeübt wird.

6. Wärmetauscher nach den Ansprüchen 4 und 5, wobei die Verbindungselemente (50) jeweils einen oder mehrere Fortsätze (51) aufweisen, die mit einem Anlagekörper (53) an der Basis (22) zusammenwirken und gleichzeitig als Positionierungselemente und als Anlageelemente wirken.

7. Wärmetauscher nach einem der vorangehenden Ansprüche, wobei die Verbindungselemente (50) Stoppelemente (55) umfassen, die die Verbindungselemente (50) an der Basis (22) in der Konfiguration halten, die für die Verbindung der Verbindungselemente (50) mit der Abdeckung (24) prädestiniert ist.

8. Wärmetauscher nach Anspruch 7, wobei die Stoppelemente (55) mindestens einen Zahn (55) umfassen, der in einen an der Basis (22) angeordneten Sitz (56) einrastet.

9. Wärmetauscher nach einem der vorangehenden Ansprüche, wobei die Verbindungselemente (50) ein elastisches Element umfassen für die Wiederherstellung des Spiels und der Toleranzen zwischen der Abdeckung (24) und dem gewendelten Rohr (12) .

10. Wärmetauscher nach einem der vorangehenden Ansprüche, wobei die Basis (22) und die Abdeckung (24) jeweils eine Öffnung für einen jeweiligen Zugang (14, 16) zu dem gewendelten Rohr (12) aufweisen, wobei die Öffnung in der Basis (22) und/oder die Öffnung in der Abdeckung (24) so ausgeführt ist, dass sie in Bezug auf den jeweiligen Zugang das Maß von mindestens einer Endwindung des gewendelten Rohres (12) mit einer Steigung größer als die Steigung zwischen den anderen Windungen aufweist, um das Einsetzen des Zugangs (14, 16) in die jeweilige Öffnung in der Basis (22) und/oder in der Abdeckung (24) ohne Beeinträchtigung des zylindrischen Gehäusemantels (20) zu ermöglichen.

11. Wärmetauscher nach einem der vorangehenden Ansprüche, wobei an dem zylindrischen Gehäusemantel (20) eine Öffnung (60) für Kondensat vorgesehen ist.

12. Wärmetauscher nach Anspruch 11, wobei die Basis (22) nahe an der Endwindung (12a) des gewendelten Rohres (12) einen Vorsprung (70) aufweist, der derart geformt ist, dass er das Kondensat sammelt und in Richtung auf die Öffnung (60) lenkt und dafür sorgt, dass das Kondensat über oder unter der Endwindung (12a) des gewendelten Rohres (12) hindurchfließt.

## Revendications

1. Échangeur de chaleur du type comportant un tube hélicoïdal (12) logé dans un carter, dans lequel le carter comprend une coque cylindrique (20) aux extrémités de laquelle une base (22) et un couvercle (24) sont respectivement montés, **caractérisé en ce que** la base et le couvercle sont fixés l'un à l'autre avec l'interposition d'éléments de raccordement (50) qui sont montés par raccordement par ajustement et/ou par encliquetage sur la base (22).

2. Échangeur de chaleur selon la revendication 1, comprenant un joint annulaire (40) intercalé radialement entre la coque cylindrique (20) et la base (22).

3. Échangeur de chaleur selon la revendication 2, dans lequel la base (22) comprend un bord annulaire sur la paroi externe duquel une rainure annulaire est prévue pour loger le joint annulaire (40).

4. Échangeur de chaleur selon l'une quelconque des revendications précédentes, dans lequel les éléments de raccordement (50) comprennent des éléments de positionnement (51) qui coopèrent avec des éléments de guidage (53) prévus sur la base (22) pour le positionnement prédéterminé des éléments de raccordement (50) par rapport à la base (22) dans la configuration prévue pour le raccordement avec le couvercle (24).

5. Échangeur de chaleur selon l'une quelconque des revendications précédentes, dans lequel les éléments de raccordement (50) comprennent des éléments de butée (51) qui coopèrent avec les éléments de butée (53) prévus sur la base (22) afin de contrer la traction exercée dans le raccordement entre la base (22) et le couvercle (24).

6. Échangeur de chaleur selon les revendications 4 et 5, dans lequel les éléments de raccordement (50) comprennent chacun un ou plusieurs appendices (51) qui coopèrent avec un élément de butée (53) sur la base (22) afin de servir en même temps d'éléments de positionnement et d'éléments de butée.

7. Échangeur de chaleur selon l'une quelconque des revendications précédentes, dans lequel les éléments de raccordement (50) comprennent des éléments d'arrêt (55) qui maintiennent les éléments de raccordement (50) sur la base (22) dans la configuration prédisposée pour raccorder les éléments de raccordement (50) au couvercle (24).

8. Échangeur de chaleur selon la revendication 7, dans lequel les éléments d'arrêt (55) comprennent au moins une dent (55) qui se met en prise par encliquetage dans un siège (56) agencé sur la base (22).

9. Échangeur de chaleur selon l'une quelconque des revendications précédentes, dans lequel les éléments de raccordement (50) comprennent un élément élastique pour récupérer le jeu et les tolérances entre le couvercle (24) et le tube hélicoïdal (12).

10. Échangeur de chaleur selon l'une quelconque des revendications précédentes, dans lequel la base (22) et le couvercle (24) comprennent chacun une ouverture pour un accès (14, 16) respectif du tube hélicoïdal (12), l'ouverture dans la base (22) et/ou l'ouverture dans le couvercle (24) étant réalisée(s) pour mesurer par rapport à l'accès respectif, au moins une spire terminale du tube hélicoïdal (12) ayant un pas supérieur au pas entre les autres spires pour permettre l'insertion de l'accès (14, 16) dans l'ouverture respective dans la base (22) et/ou dans le couvercle (24) sans interférer avec la coque cylindrique (20).

11. Échangeur de chaleur selon l'une quelconque des revendications précédentes, dans lequel une ouverture (60) pour la condensation est prévue sur la coque cylindrique (20).

12. Échangeur de chaleur selon la revendication 11, dans lequel la base (22) comprend une saillie (70) proche de la spire terminale (12a) du tube hélicoïdal (12), la saillie étant formée afin de collecter la condensation et la diriger vers l'ouverture (60) en la faisant passer au-dessus ou au-dessous de la spire terminale (12a) du tube hélicoïdal (12).
